# EUROPEAN PATENT APPLICATION

(11) **EP 1 591 276 A2**
(43) Date of publication of application: **02.11.2005**
(21) Application number: 05380085.0
(22) Date of filing: 27.04.2005
(51) Int. Cl.: B60B 7/20

(54) **Badge Holder system for rotating support part**

(30) Priority: 30.04.2004 ES 200401037
(71) Applicant: Maier, S. Coop., 48300 Gernika (ES)
(72) Inventor: Mandaluniz Bilbao, Joseba, 48300 Gernika (ES)
(74) Representative: Urteaga Simarro, José Antonio

(57) **Abstract**

Self-stabilising badge or logo holder system that is installed on a support part (1) such as a wheel cover or hubcap on a vehicle wheel, where the badge is stabilised by means of the oscillation in relation to the badge of a articulated quadrilateral comprising an oscillating mass (12), and where the oscillation of the badge is dampened by means of the articulated quadrilateral coming into contact with a friction surface (17) or with stoppers (15, 16) made of a material with elastic qualities, or with both (17, 15, 16). The inventive system considerably reduces the oscillations of the badge in comparison to previous solutions based on basic pendulums.

## Description

### Technical Field

The invention relates to badge, emblem or logo holder systems that are installed on rotating support parts such as wheel covers or hubcaps on motor vehicle wheels, and in which the objective is for the badge not to rotate in conjunction with the rotating support part but for it to occupy its correct and legible position, suffering small dampened oscillations at the most.

### Prior Art

The importance that the actual product trademarks and badges on consumer products are now acquiring, not only as elements advertising the product but as elements with a value of their own, is a well-known phenomenon. In this respect, visible badges on products in many sectors are now becoming increasingly large and numerous and aesthetically enhanced.

This trend is being noted in the automotive industry, among others, in which it is now being observed that manufacturers are incorporating into their vehicles an increasing number of badges, monograms and other elements whose function it is enable one make of vehicle to be easily distinguishable from another. Thus, whereas badges were initially mounted only on the front and rear of the vehicle, they are now also visible in other places such as the passenger compartment of the vehicle, the driver compartment (on the airbag cover, steering wheel, etc.), and the sides (doors, door frames, etc.). Even the wheel covers, whose basic function is to cover an unaesthetic wheel rim, and hubcaps, whose function is to cover the hubs or area where the bolts fastening an aesthetic wheel rim are located, are now starting to incorporate badges on externally visible areas.

The incorporation of badges on wheel covers or hubcaps presents various technical problems. First of all, due to the rotation of the wheel covers or hubcaps, the badges are only legible or distinguishable when the vehicle is stationary. Secondly, if the wheel covers or hubcaps are not fitted correctly, it may be the case that when in the rest position the badges on some wheels may be rotated or displaced in relation to the badges on other wheels, with the resulting aesthetic disorder. Naturally, in this selfsame rest position it is highly probable that the badge has not stopped in its correct or recognisable position and has been rotated to any angle between 0 and 360°.

In order to solve these problems, current art is now incorporating designs of badge holder systems for wheel covers or hubcaps in which the badge does not rotate with the wheel cover or hubcap but is disconnected from them and able, therefore, to remain in a recognisable position at all times, even in the rest position.

In these new designs in which the badge does not rotate in conjunction with the wheel cover or the hubcaps but remains disconnected, virtually motionless with a slight oscillating or similar movement, the intention is to dampen the movement of the badge as much as possible so that any deviation from its rest position is rapidly corrected and the badge stabilises itself almost immediately.

New designs include various badge holder systems whose freedom of movement with respect to the wheel cover or hubcaps is achieved by intermediate bearings, and whose stabilising forces are created by means of solutions as varied as pendulum masses, liquids, magnetic fields produced by magnets, etc.

For example, patents US 4280293 A1 and EP 0330534 A2 disclose two badge holder systems whose movement is not connected to that of the wheel cover, and in which the correct positioning of the badge is achieved by a traditional pendulum or mass connected to the badge holder, and stabilisation or slowing down is achieved by the presence of a liquid that dampens the movement of certain parts running through it and also connected to the badge holder. These solutions based on the use of liquids are the result of a highly complex and expensive manufacturing process that requires the design of watertight and extremely hardwearing parts.

As regards solutions that are easier to manufacture, a type of design for a badge holder system is presented in GB 2317149 A and US 5016944 A1, in which both the correct positioning and the slowing down of the badge is achieved by a spherical moving part that tends to turn until situated in its final position linked to the correct orientation of the badge.

Along similar lines, also using solid rather than liquid or magnetic braking systems, patent US 6120104 A1 discloses an badge holder system that does not move in conjunction with the wheel cover and which incorporates a traditional pendulum or mass connected to the badge that forces the badge to return to the rest position. It also envisages the use of mechanical stoppers that limit the movement of the badge as a result of a shock effect.

These latter designs based on solid turning parts or traditional pendulums rather than liquid or magnetic elements are easier to manufacture than designs using stabilising liquids. However, it has been noted that stabilising of the badge until it reaches its correct position as disclosed in these solutions can still be improved upon enormously.

In this respect it is an object of this invention to define a badge holder system connected to a wheel cover or hubcap that significantly reduces the amplitude, frequency and duration of the oscillation of the badge from the moment it leaves the correct position until its recovery or stabilisation, and which at the same time does not involve a complex or expensive manufacturing process, as it does not require liquids, gaseous, magnetic or similar elements.

It is another object of this invention to define an independent badge holder system, which in conjunction with the wheel cover or hubcap includes all the elements required for it to operate correctly and does not require variations or the incorporation of added components in the rest of the motor vehicle's systems.

### Detailed Description of the Invention

In order to achieve the aforementioned objectives, the invention defines a badge holder system applicable to a rotating support part, where this rotating support part can be a wheel cover, a hubcap, a part fixed to a wheel cover or a hubcap, or in general any rotating part upon which it may be decided to attach a badge or logo. The badge holder system consists of a series of parts, among them a badge holder part on whose exterior the vehicle badge or logo is disposed by suitable means: machining, painting, sticking, pad printing, etc. A bearing, fitting specifically around a central rotating axis on the badge holder part, is disposed between the rotating support part and the badge holder system, enabling relative rotation between both parts.

The stabilising function of the badge holder system, whose function is to enable the badge to remain in its correct position in a rest situation and tend to recover its correct position in an acceleration situation, is performed by an oscillating mass that is suspended from two connecting rods connected at the ends opposing the badge holder part. The four ends of the connecting rods are articulated so that the imaginary lines linking the four ends of the connecting rods together form an articulated quadrilateral.

In an embodiment of the invention, the articulated connection between the connecting rods and the badge holder part is formed specifically between the connecting rods and each axis connected to the badge holder part, where said axes are formed to project from the badge holder part at the same height as the central rotation axis of the badge holder part, and on both sides and equidistant from it.

In another embodiment of the invention, the connection between the connecting rods and badge holder part is formed between the connecting rods and a protuberant support zone on the central rotation axis of the badge holder part, with this support zone an integral or non-integral zone of the badge holder part, and with, in all cases, this support zone not presenting a relative movement in relation to the badge holder part. Thus, the support zone of the connecting rod can be formed as part of the badge holder part itself, as an independent part fixed to the badge holder part, or as other equally valid solutions.

With the object of dampening the possible oscillations of the badge, the inventive badge holder system contemplates a friction-based dampening device and another shock, deformation and friction-based dampening device. In the possible modes of embodiment of the invention, both of these can be used separately or in a combination of both.

Friction-based dampening is performed by a friction surface disposed on the inner face of the badge holder part, in slight contact with the mass, so that when the articulated quadrilateral oscillates a slight friction is produced between the mass and the friction surface that helps slow down the oscillation of the quadrilateral and, as a consequence, that of the badge. The friction between the mass and the surface should not be particularly great, because in small oscillation situations a great friction could immobilise the mass against the friction surface, thus causing the articulated quadrilateral to function as a traditional pendulum, with the advantages of the invention thus being lost.

To enable shock, deformation and friction-based dampening, the badge holder system is fitted with stoppers made of an elastomer, silicon, rubber or foam material or in general any material with considerable elastic qualities. During the oscillation of the articulated quadrilateral, the connecting rods, the mass, and even all of them together, come into contact with said stoppers. As they are made of a material with elastic qualities, the stoppers absorb energy from the oscillation of the mass and of the badge holder part itself, thus helping the latter to stabilise itself.

The aforementioned stoppers are preferably made in the form of protuberances projecting from the innermost face of the badge holder part, although other configurations are not discounted.

In possible modes of embodiment of the invention, the deformable stoppers can be disposed on the inner part of the articulated quadrilateral or on its outer part, and vary in form and even in number, with one stopper up to the number of stoppers considered necessary possibly existing.

In comparison to similarly manufactured systems not containing liquids, magnets, etc., and based on oscillating members such as traditional pendulums, the inventive badge holder system presents a series of important advantages.

As explained above, the inventive badge holder system consists of two units that move in relation to each other (the badge holder part, and the articulated quadrilateral formed by the connecting rods and the mass). This design provides greater dampening than that offered by those inventions based on a traditional pendulum or mass connected to the logo support, because in the relative movement between the members holding the emblem an additional dissipation of energy occurs.

As has been explained, not only should the amplitude and the duration of the badge oscillations be reduced, but the frequency of said oscillations as well. If a traditional pendulum is used, the pendulum must be fitted with a very long connecting rod to bring about frequency reductions comparable to those achieved with the articulated quadrilateral system of the present invention.

Graphs are included below to provide an indication of the improvements resulting from the use of an articulated quadrilateral as opposed to solutions based on a traditional pendulum.

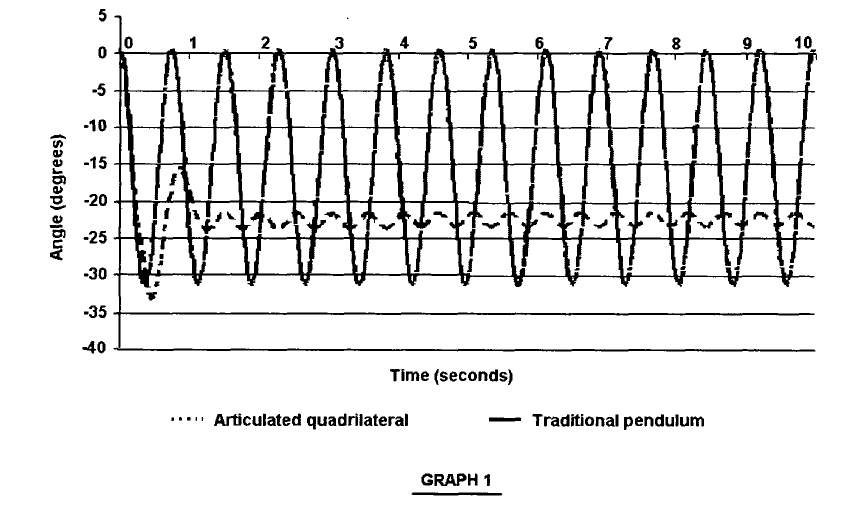

This first graph shows the behaviour of two badge holder systems of similar characteristics, one of them using an articulated quadrilateral according to the invention, and the other using a traditional pendulum, subjected to a test in which the vehicle is subjected to an acceleration of 0 to 100 km per hour in 10 seconds. As the graph shows, the badge controlled by a traditional pendulum oscillates with an amplitude of over 30° and maintains the oscillation amplitude throughout the test, whereas the badge connected to an articulated quadrilateral oscillates with a decreasing amplitude until it reaches a stable situation in less than two seconds.

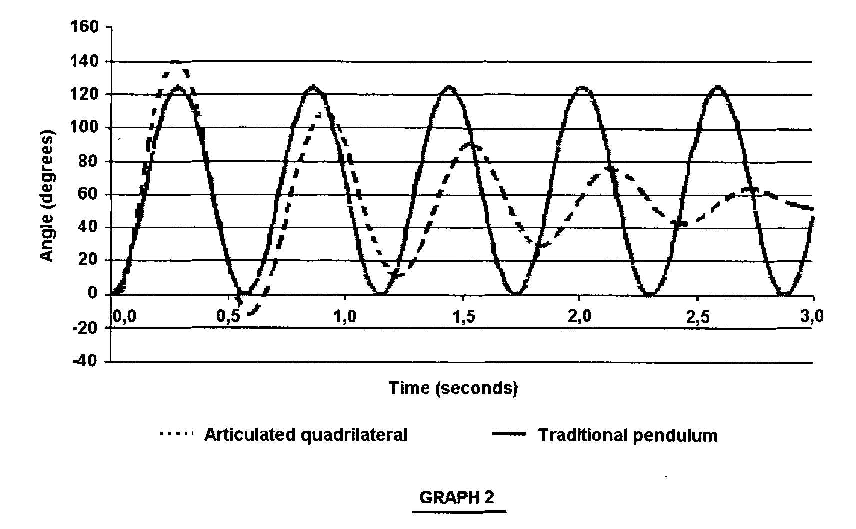

Graph two shows the behaviour of two badge holder systems of similar characteristics, one of them using an articulated quadrilateral according to the invention, and the other using a traditional pendulum, subjected to a test in which the vehicle is subjected to an deceleration of 200 to 0 km per hour in three seconds. As the graph shows, the badge controlled by a traditional pendulum oscillates with an amplitude of over 120° and maintains the oscillation amplitude throughout the test, whereas the badge connected to an articulated quadrilateral oscillates with a decreasing amplitude until it reaches a stable situation before the test is completed.

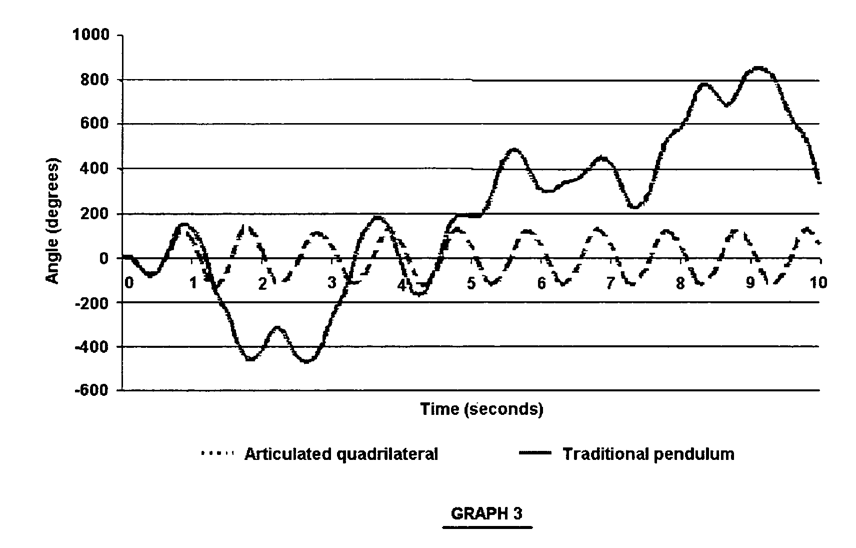

Graph three shows the behaviour of two badge holder systems of similar characteristics, one of them using an articulated quadrilateral according to the invention and the other using a traditional pendulum, subjected to a test in extreme conditions, specifically in which the vehicle is subjected to a harmonic acceleration of 1 g amplitude and a frequency of 1 Hz, i.e. the wheel rotates forward and backwards alternately in a movement whose acceleration is a sinusoidal curve of 1 g amplitude and a period of 1 second. The purpose of this test is to analyse the behaviour of both systems in extreme situations with a view to establishing which of the two systems is the most stable, where 'stable' is understood to mean that there is no risk of it completing a full revolution (a rotation of more than 360°). It must be borne in mind that rotations of more than 360° in the inside of the wheel cover may cause the wheel itself to become imbalanced and affect the steering of the vehicle, and must therefore be avoided.

As the graph shows, the behaviour of the badge controlled by a traditional pendulum is unstable (performing complete revolutions or revolutions of over 360° in all directions), whereas the badge connected to a articulated quadrilateral oscillates around its rest position with a constant amplitude.

### Description of the figures

Details of the invention can be seen in the figures attached although said figures do not aim to restrict the scope of the invention:
- Figure 1 shows an elevation in cross-section (along the line A-A in figure 2) of a first mode of embodiment of the invention.
- Figure 2 shows a side view in cross-section of the mode of embodiment of figure 1 (along the line C-C).
- Figure 3 shows another side view in cross-section of the mode of embodiment of figure 1 (along the line B-B).
- Figure 4 shows an elevation in cross-section (along the line D-D in figure 5) of a second mode of embodiment of the inventive badge holder system.
- Figure 5 shows a side view in cross-section of the mode of embodiment of figure 4 (along the line F-F).
- Figure 6 shows another side view in cross-section of the mode of embodiment of figure 4 (along the line E-E).
- Figure 7 shows an elevation in cross-section (along the line G-G in figure 8) of a third mode of embodiment of the inventive badge holder system.
- Figure 8 shows a side view in cross-section of the mode of embodiment of figure 7 (along the line I-I).
- Figure 9 shows another side view in cross-section of the mode of embodiment of figure 7 (along the line H-H).
- Figure 10 shows an elevation in cross-section (along the line J-J in figure 11) of a fourth mode of embodiment of the inventive badge holder system.
- Figure 11 shows a side view in cross-section of the mode of embodiment of figure 10 (along the line K-K).
- Figure 12 shows another side view in cross-section of the mode of embodiment of figure 10 (along the line L-L).

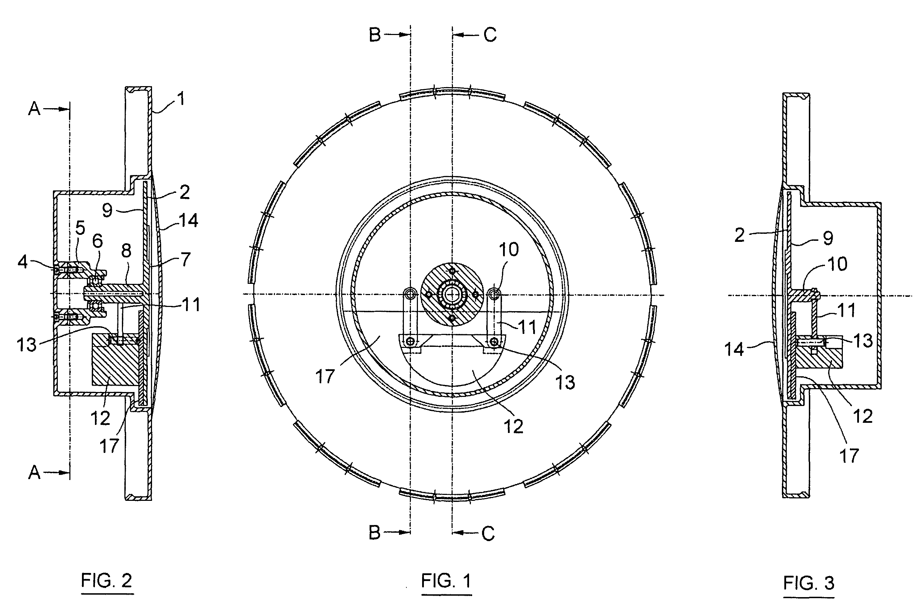

Figures 1, 2 and 3 show a mode of embodiment of the invention which, as with the other modes of embodiment, is based on the addition of a series of parts that form the badge holder system to a rotating support part (1), where this rotating support part (1) can be fixed to the wheel cover or hubcap or can even be the wheel cover or hubcap itself.

As figure 1 shows, the badge is situated on the outer face (7) of a badge holder part (2) that rotates freely around a central axis (8) in relation to the rotating support part (1) by means of the action of a bearing (6). To facilitate the assembly of the unit formed by the rotating support part (1), the bearing (6) and the badge holder part (2), in the mode of embodiment in the figure the bearing (6) is not fitted directly onto the rotating support part (1) but is fitted in the interior of a bushing (5) which is in turn fixed to the rotating support part (1) by means, in this case, of some bolts (4).

As can be seen in figure 1, and even more clearly in figures 2 and 3, the badge holder system of the invention comprises a mass (12) that oscillates while suspended from two connecting rods (11). Said connecting rods are hooked by pins (13) to each axis (10). The axes (10) in this case are made in the form of two protuberances projecting from the inner face (9) of the badge holder part (2). Subsequently, the imaginary lines linking together the four articulated connections corresponding to the ends of the connecting rods form an articulated quadrilateral.

To dampen the oscillation of the articulated quadrilateral, the inner face (9) of the badge holder part (2) comprises a friction surface (17) that rubs against the mass (12) when the mass (12) oscillates, thus dampening or slowing down the oscillation of the badge.

Figures 2 and 3, as with the rest of the figures representing side views, feature a protective cover (14) whose function is to provide a certain watertightness to the rotating support part (1) and in general to the parts it covers, thus keeping unwanted external agents such as rain, mud, etc. out.

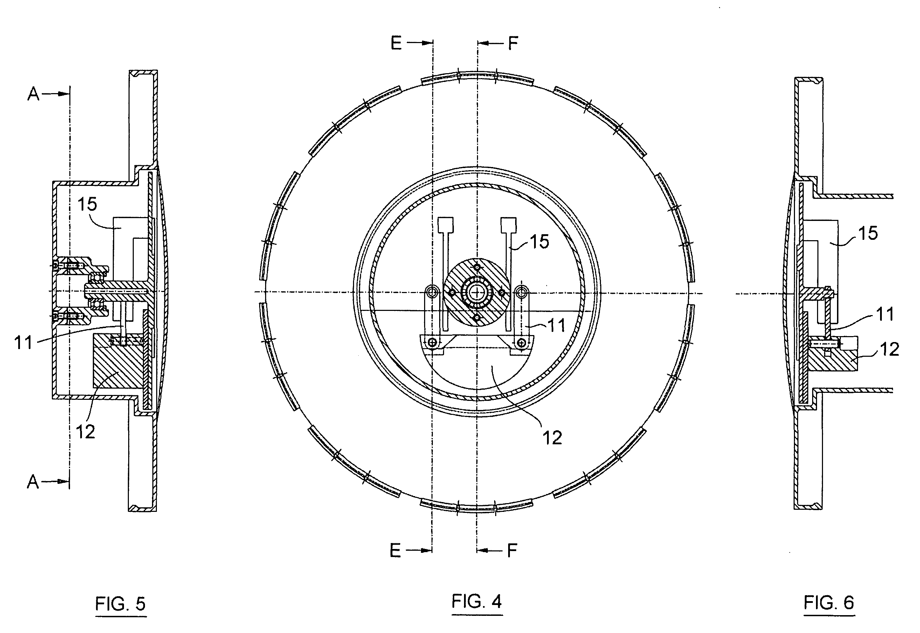

Figures 4, 5 and 6 detail a second mode of embodiment of the invention, in which in addition to the members included in figures 1, 2 and 3 the badge holder system has been fitted with some stoppers (15) inside the articulated quadrilateral made of a material with elastic qualities. During the oscillation of the connecting rods (11) and the mass (12), these members come into contact with the inner stoppers (15), causing in said contact a transferral of energy from the oscillating members (11, 12) to the inner stoppers (15) and, therefore, a dampening of the movement of the badge holder part.

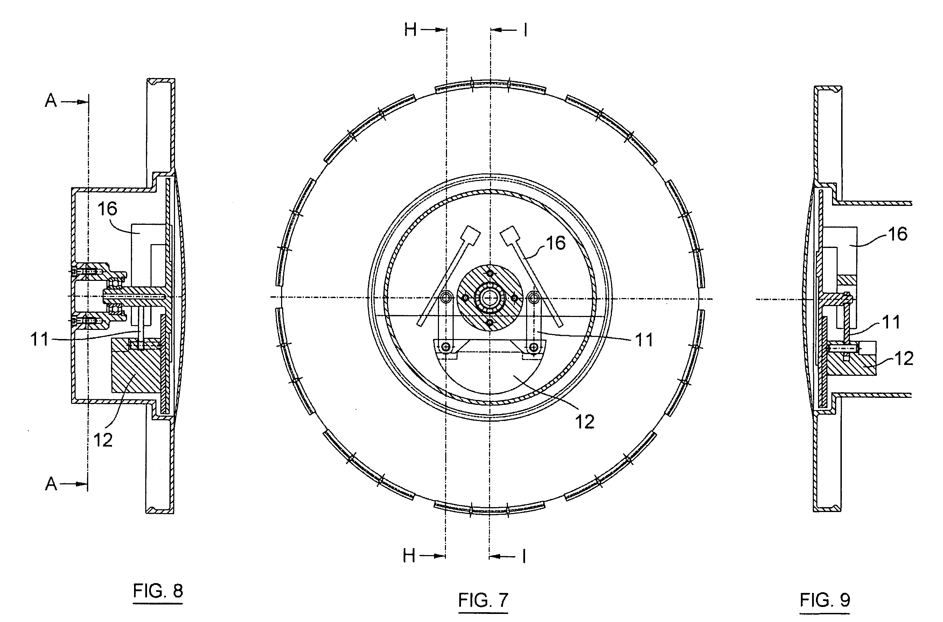

Figures 7, 8 and 9 show a similar diagram to that of figures 4, 5 and 6, with the exception that the stoppers with elastic qualities are in this case outer stoppers (16), i.e. they are situated outside the articulated quadrilateral formed by the connecting rods (11) and the mass (12).

In the previous modes of embodiment the stoppers (15, 16) are represented as having been made in the form of protuberances projecting from the badge holder part (2).

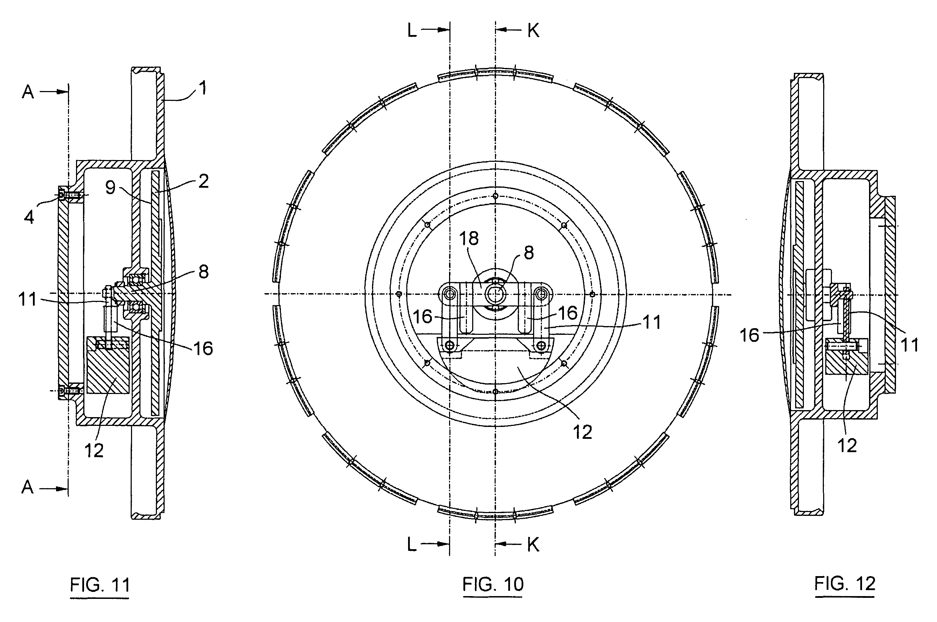

Figures 10, 11 and 12 show a fourth mode of embodiment of the invention, significantly different to the previous modes of embodiment. Firstly, the access to the interior of the rotating support part (1) has been modified, although this access is not an aspect claimed by this invention. Secondly, and with regard to the innovative aspects of the invention, the mode of hooking the articulated quadrilateral onto the badge holder part (2) has been modified, so that in this case the connecting rods (11) are not hooked to each axis but to a support part (18) connected in a non-articulated manner to the central axis (8) of the badge holder part (2). The inner stoppers (16) project out of the support part (18) and not out of the inner face (9) of the badge support part (2). Furthermore, this mode of embodiment does not include friction-based dampening with the friction surface, as in this case the mass of the articulated quadrilateral is not directly facing the badge holder part.

It is evident that the badge holder system, disclosed in this document for its application to wheel covers or hubcaps on vehicles, can be used in general for any application that requires the coexistence of a rotating part with a non-rotating part, with or without badges, hooked to the rotating part and whose position must be kept as stable as possible, reducing the amplitude of the oscillations and the stabilisation time of the non-rotating part as much as possible.

## Claims

1. Badge holder system applicable to a rotating support part (1), with the rotating support part (1) being a wheel cover, hubcap, a part fixed to a wheel cover or hubcap, or any other rotating part upon which it may be decided to present a badge, logo or any type of emblem, where the rotating support part (1) and the badge holder system present a disconnected relative rotating movement, where the badge holder system comprises a badge holder part (2) on whose outer face can be situated the badge, **characterised in that** the badge holder system comprises:
- a mass (12) suspended from two connecting rods (11), where the ends of the connecting rods (11) opposite the mass (12) are connected directly or indirectly to the badge holder part (2), and where the connections of the four ends of the connecting rods (11) are articulated so that the imaginary lines linking the four ends of the connecting rods together form an articulated quadrilateral.

2. Badge holder system according to claim 1, wherein the articulated connections between the connecting rods (11) and the badge holder part (2) are formed between the connecting rods (11) and respective axes connected to or formed on the badge holder part (2).

3. Badge holder system according to claim 2, wherein the axes connected to or formed on the badge holder part (2) project out of the badge holder part (2) at the same height as the central rotation axis of the badge holder part (2), and on both sides and equidistant from said central rotation axis.

4. Badge holder system according to claim 1, wherein the articulated connections between the connecting rods (11) and the badge holder part (2) are formed between the connecting rods (11) and a protuberant support zone on the central rotation axis of the badge holder part (2), and in which this support zone can be an integral or non-integral part of the badge holder part (2), with in all cases this support zone not presenting a relative movement in relation to the badge holder part (2).

5. Badge holder system according to claim 1, wherein the badge holder part (2) comprises one or more stoppers (15, 16), made of a material with elastic qualities, that absorb energy from the connecting rods (11) and/or the mass (12) when the connecting rods (11) and/or the mass (12) come into contact with said stoppers (15, 16) during the oscillation of the articulated quadrilateral.

6. Badge holder system according to claim 5, wherein the stoppers (15) are disposed inside the articulated quadrilateral.

7. Badge holder system according to claim 5, wherein the stoppers (16) are disposed outside the articulated quadrilateral.

8. Badge holder system according to claim 1, wherein the badge holder part (2) presents on its inner face a friction surface (17) facing all or part of the surface of the mass (12) of the articulated quadrilateral so that during all or part of the oscillation of the mass (12) in relation to the badge holder part (2), all or part of the surface of the mass (12) comes into contact with all or part of the friction surface (17).
